# EUROPEAN PATENT APPLICATION

(11) **EP 4 016 757 A1**
(43) Date of publication of application: **22.06.2022**
(21) Application number: 20215002.5
(22) Date of filing: 17.12.2020
(51) Int. Cl.: H01R 13/66, B60L 3/04, B60L 53/16, H01R 13/53

(54) **ELECTRICAL CONNECTOR AND METHOD**

(71) Applicant: Vestel Elektronik Sanayi ve Ticaret A.S., 45030 Manisa (TR)
(72) Inventor: Kahyaoglu, Mert, 45030 Manisa (TR); Yalin, Nevzat, 45030 Manisa (TR)
(74) Representative: Kehl, Ascherl, Liebhoff & Ettmayr Patentanwälte Partnerschaft mbB

(57) **Abstract**

The present disclosure provides an electrical connector (100, 200) comprising an outer enclosure (101, 201) that surrounds a contact space (103) and comprises an opening on a front side (105) of the electrical connector (100, 200) in longitudinal direction (102) of the contact space (103); a number of electrical contacts (106, 110, 114, 206) arranged in the contact space (103), wherein the electrical contacts (106, 110, 114, 206) each comprise a hollow contact housing (107, 111, 115) with an opening on the first side and an electrical contact element (109, 113, 117) arranged in the hollow contact housing (107, 111, 115), and wherein at least one of the hollow contact housing (107, 111, 115) comprises an opening (121, 122) in radial direction; and a light sensor (123, 223) arranged in the contact space (103) and configured to sense light (124, 224) emitted in a respective hollow contact housing (107, 111, 115) of at least one of the electrical contacts (106, 110, 114, 206) that comprise an opening (121, 122) in radial direction. Further, the present invention provides a respective method.

## Description

### TECHNICAL FIELD

The disclosure relates to an electrical connector and a respective method.

### BACKGROUND

Although applicable to any electrical connector, the present disclosure will mainly be described in conjunction with electrical charging connectors for electrical vehicles.

Electrical vehicles are becoming more popular due to the reduced amount of exhaust fumes produced during operation of such vehicles.

In an electrical vehicle, electrical energy is stored in a battery for operation of the vehicle. In order to electrically operate such a vehicle, the battery needs to be charged regularly. To this end, the electrical vehicle is usually connected to a power supply via a charging cable comprising respective charging connectors, while the electrical vehicle and/or the charging station comprise the respective receptacles for the charging connectors.

Since high currents are transmitted at high voltages through such charging cables and connectors, electric arcs may arise when coupling a charging connector to the respective plug or when decoupling the charging connector from the respective plug.

Accordingly, there is a need for reliably detecting such electric arcs.

### SUMMARY

The above stated problem is solved by the features of the independent claims. It is understood, that independent claims of a claim category may be formed in analogy to the dependent claims of another claim category.

Accordingly, it is provided:
An electrical connector comprising an outer enclosure that surrounds a contact space and comprises an opening on a front side of the electrical connector in longitudinal direction of the contact space, a number i.e., one or more, of electrical contacts arranged in the contact space, wherein the electrical contacts each comprise a hollow contact housing with an insertion opening on the first side and an electrical contact element arranged in the hollow contact housing, and wherein at least one of the hollow contact housings comprises an opening in radial direction. The electrical connector further comprises a light sensor arranged in the contact space and configured to sense light emitted in the respective contact housing of at least one of the electrical contacts that comprise an opening in radial direction.

Further, it is provided:
Method for detecting an electric arc in an electrical connector with an outer enclosure that surrounds a contact space and comprises an opening on a front side of the electrical connector in longitudinal direction of the contact space, the electrical connector further comprising a number of electrical contacts arranged in the contact space, wherein the electrical contacts each comprise a hollow contact housing with an opening on the first side and an electrical contact element arranged in the hollow contact housing, and wherein at least one of the hollow contact housings comprises an opening in radial direction. The method comprises sensing light emitted in the respective contact housing of at least one of the electrical contacts that comprise an opening in radial direction, and outputting a detection signal based on the sensed light.

The present patent application is based on the finding, that electric arcs may occur in electrical contacts when a male connector and a female connector are coupled to each other. This is, however, the case every time an electrical vehicle is charged. An electric arc may be detrimental to the electrical properties of the electrical connection. For example, the resistance of the coupling may increase because the surfaces of the electrical contacts may be damaged by the arc. Further, heat may be generated by an electrical arc. It is understood, that in this context, so called plug-in hybrid vehicles or in general all vehicles that may be charged from an external electrical power source are also considered to be electrical vehicles.

In addition, the present disclosure acknowledges that detecting an electric arc based on electrical signals e.g., based on emissions in a respective frequency band, may be unreliable because such electrical emissions may be caused by other sources.

The present disclosure therefore identifies an electric arc based on the light that is emitted by the electric arc. To this end, the electrical connector according to the present disclosure comprises a light sensor that is capable of receiving the light emitted by the electric arc and to provide a respective light detection signal.

The electrical connector comprises an outer enclosure that encloses a contact space and accommodates the light sensor and a number of electrical contacts, that are monitored for an electric arc, in the contact space. The outer enclosure comprises an opening on a front side in longitudinal direction of the contact space. The longitudinal direction is defined by the direction of movement of the electrical connector when the electrical connector is coupled to or mated to a respective counterpart. It is understood, that other electrical contacts may also be present either in the outer enclosure or outside of the outer enclosure, which are not monitored for the occurrence of electric arcs.

Each one of the single electrical contacts comprises a hollow contact housing. The hollow contact housing may comprise a tube-like shape and an electrical contact element may be provided in the respective contact housing. The contact housing comprises an opening on the front side i.e., on the same side as the outer enclosure, for coupling the single electrical contact elements with their respective counterparts. Usually, the hollow contact housing will extend over the full length of the electrical contact element and therefore protect or at least cover the electrical contact element. It is understood, that the electrical contact element may be a male electrical contact element e.g., a pin, or a female electrical contact element e.g., a socket or jack.

An electric arc may occur, when the electrical connector is coupled to its respective counterpart or decoupled from the counterpart. The arc will occur shortly before the electrical contact elements are coupled to each other, or just after separating the electrical contact elements from each other. An electric arc may also occur during normal operation of the electrical connector, when the electrical connector is coupled to its counterpart. The arc will, therefore, usually occur inside of the hollow contact housing. The light sensor, however, requires a line of sight to the spot or place of occurrence of the arc. It is understood, that the line of sight no necessarily is a direct line of sight. Instead, it may be sufficient if reflections of the light caused by an electric arc reach the light sensor.

In the electrical connector according to the present invention, the hollow contact housings of those electrical contacts that need to be monitored for the occurrence of an electric arc are therefore provided with an opening.

The opening in the outer shell of the hollow contact housings will be provided such that light created by an electric arc may travel through the opening to the light sensor and may be sensed by the light sensor.

It is understood, that a respective signal may be provided from the light sensor to another entity, where the signal from the light sensor may be evaluated.

With the electrical connector according to the preset disclosure it is therefore possible to detect an electric arc in an electrical connector easily, without analyzing complex frequency spectra or frequency patterns.

Further embodiments of the present disclosure are subject of the further depend claims and of the following description, referring to the drawings.

In an embodiment, the electrical connector may comprise an evaluation processor coupled to the light sensor and configured to evaluate a detection signal provided by the light sensor and to provide an arc alarm signal in case that the detection signal is indicative of an electric arc.

The evaluation processor may in an exemplary embodiment be coupled to the light sensor via discrete signal lines, and the light sensor may provide e.g., a voltage-based detection signal, wherein a higher voltage may indicate a higher light intensity. In other embodiments, the detection signal may be transmitted e.g., based on the current on the signal lines or as digital signal via a serial data line or a data bus.

The light sensor may in an embodiment for example comprise a light sensitive diode or transistor, also called e.g., photo diode or photo transistor, that is coupled to an analog-to-digital converter of the evaluation processor. The evaluation processor may read the voltage level of the detection signal in regular intervals and determine the light intensity based on the measured voltage. It is understood, that the evaluation processor may comprise a mapping formula or mapping table specific to the used type of light sensor for mapping the voltage to a light intensity. As alternative, the evaluation processor may operate directly on the measured voltage level. It is understood, that in this regard, if a threshold value, a formula or any other operation on the detection signal is described, such a threshold value, formula or other operation may be applied to any signal that represents the detection signal or the light intensity i.e., to a mapped signal or the raw voltage signal.

The evaluation processor after analyzing the detection signal and determining if an electric arc is present, outputs a respective arc alarm signal, if the detection signal is indicative of an electric arc. Such an arc alarm signal may be provided to a user and/or to another entity like e.g., to a management unit. Such a management unit may then deactivate the respective charging outlet and may forward the arc alarm signal e.g. to a management center of the operator of the respective charging station.

The evaluation processor may be provided as a dedicated processing element, like e.g. a processing unit, a microcontroller, an FPGA, a CPLD or the like. The evaluation processor may at least in part also be provided as a computer program product comprising computer readable instructions that may be executed by a processing element. In a further embodiment, the evaluation processor may be provided as addition or additional function or method to the firmware or operating system of a processing element that is already present in the respective application. For example, in a charging station a charging controller may be present that managements the energy transfer to a vehicle during charging. Such a charging controller may be modified to implement the functions of the evaluation processor.

In a further embodiment, the evaluation processor may be configured to determine that the detection signal is indicative of an electric arc if the detection signal indicates a light intensity above a predetermined intensity threshold.

The light sensor is provided in the contact space of the outer enclosure and will therefore not be exposed to the ambient light at full intensity. In contrast, an electric arc will cause a very intensive light emission of high brightness. Therefore, a threshold value may be used that allows detecting an arc if the brightness or intensity measured by the light sensor is above the level of usual ambient light and in the intensity or brightness range of an electric arc.

In another embodiment, the predetermined threshold may be a fixed threshold. As alternative, the predetermined threshold may be calculated by the evaluation processor as an average of the light intensity indicated by the detection signal over a predetermined period of time plus a predetermined threshold value.

The predetermined threshold as fixed value may be above the intensity or brightness of ambient light caused by sunlight and may be below the intensity or brightness caused by an electric arc, as described above.

A dynamic or variable threshold value may be determined by the evaluation processor based on a mean value of the detection signal over a predetermined period of time. The evaluation processor may calculate e.g., a moving average with a predetermined number of measurements of the detection signal. Every new measurement of the detection signal may be compared to the moving average, and if the value indicated by the new measurement is more than a predetermined value above the moving average, an electric arc may be detected. It is understood, that the predetermined value comparing a new measurement to the moving average may be an absolute value for a relative value e.g., 10%, 20%, 30%, 40% or 50%. If an absolute value is used, this value may be provided in the same unit as the detection signal.

In yet another embodiment, the electrical connector may comprise a light guiding element for each one of the hollow contact housings. Each one of the light guiding elements may be arranged in the opening of the respective hollow contact housing, and may comprise a light acceptance region oriented to the inside of the hollow contact housing and a light emitting region oriented to the outside of the hollow contact housing.

The light guiding elements may comprise e.g., a transparent plastic element that is provided in the opening that is oriented in radial direction in the respective hollow contact housing. The radial direction is orthogonal to the longitudinal direction. This means, that the contact direction or insertion direction of the electrical contacts is parallel to the longitudinal direction.

The light acceptance region of the light guiding element is oriented to the inside of the hollow contact housing and accepts any light that is created inside of the hollow contact housing. Therefore, if an electric arc is present in the hollow contact housing, the light created by this electric arc will be accepted by the light acceptance region and will be guided inside of the light guiding element to the light emitting region.

The light emitting region will then emit the light from the hollow contact housing into the contact space, where the light sensor is arranged.

With the light guiding element it is therefore possible not only to allow the light that is created by an electric arc inside of the hollow contact housing to pass through the outer wall of the hollow contact housing. Instead it is possible to guide the light into a specific direction, i.e. the direction in which the light sensor is positioned.

In another embodiment, the light acceptance region may be displaced along a longitudinal axis of the hollow contact housing with respect to the light emitting region. In addition, or as alternative, the light acceptance region may be larger in the longitudinal axis of the hollow contact housing than the light emitting region.

Displacing the light acceptance region with regard to the light emitting region allows positioning the two regions independently. The light emitting region may e.g., be placed at a back side of the hollow contact housing inside of the hollow contact housing i.e., on the opposite side of the front side.

The light acceptance region in contrast may be provided wherever the electric arc is most common or most probable to occur. Between the light acceptance region and the light emitting region, the light guiding element guides the light through the wall of the hollow contact housing.

If the light acceptance region is larger at least in longitudinal direction, than the light emitting region, the light guiding element may accept the electrical light created by an electric arc over the length of the hollow contact housing independently of the exact position of occurrence of the electric arc along the longitudinal axis of the hollow contact housing.

In a further embodiment, the electrical connector may comprise a coupling detector coupled to the evaluation processor and configured to detect, when the electrical connector is coupled to a counterpart and when the opening in the front side of the hollow contact housing is covered by the counterpart, wherein the evaluation processor is configured to evaluate the detection signal only if the coupling detector detects that the opening in the front side is covered.

As explained above, the inside of the hollow contact housing may be exposed to ambient light, while the opening on the front side of the electrical connector is not covered. In an electrical connector without a coupling detector, the evaluation processor needs to make sure, that an electric arc is detected and no false detection is performed because of high intensity of the ambient light.

With the coupling detector in contrast, the evaluation processor is informed when the electrical connector is coupled to a counterpart and the opening on the front side of the electrical connector is covered. In this situation no or very little ambient light is present in the contact space. Therefore, light detected by the light sensor while the coupling detector detects the opening to be covered may be caused by an electric arc. It is understood, that a threshold value for the light intensity may still be applied by the evaluation processor to prevent false arc detections e.g., caused by light traveling into the contact space through small slots between the hollow contact housing and the counterpart.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a perspective view of an embodiment of an electrical connector according to the present disclosure;
Figure 2 shows a sectional view of the embodiment of the electrical connector of Figure 1;
Figure 3 shows a block diagram of an embodiment of an electrical connector according to the present disclosure;
Figure 4 shows three possible embodiments of hollow contact housings with light guiding elements according to the present disclosure; and
Figure 5 shows a flow diagram of an embodiment of a method according to the present disclosure.

In the figures like reference signs denote like elements unless stated otherwise.

### DETAILED DESCRIPTION OF THE DRAWINGS

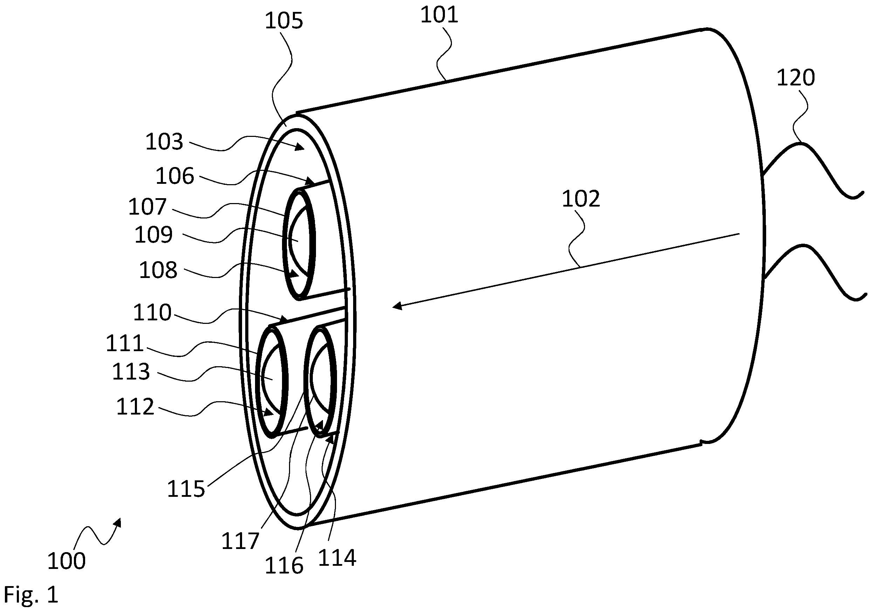

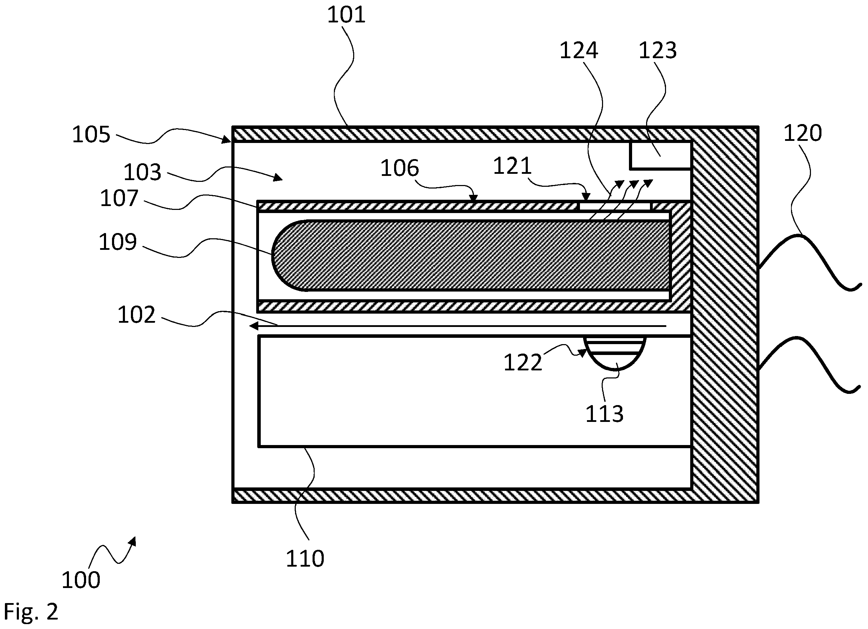

Figure 1 shows a perspective view of an electrical connector 100. The electrical connector 100 comprises an outer enclosure 101 that surrounds a contact space 103. The contact space 103 comprises an opening on a front side 105 of the electrical connector 100 in longitudinal direction 102. The electrical connector 100 further comprises a number of electrical contacts 106, 110, 114 arranged in the contact space 103. Each one of the electrical contacts 106, 110, 114 comprises a hollow contact housing 107, 111, 115 with an insertion opening 108, 112, 116 on the first side and an electrical contact element 109, 113, 117 arranged in the hollow contact housing 107, 111, 115. The hollow contact housings 107, 111, 115 each comprise an opening 121, 122 in radial direction (not visible in Figure 1, see Figure 2). It is understood, that in other embodiments, not all of the hollow contact housings may comprise such an opening. Instead for example, some of the contacts may not comprise such an opening and may therefore not be monitored for an electric arc. Exemplary electrical contacts with not opening in radial direction may comprise e.g., electrical data contacts for data transmission.

Although the electrical contacts 106, 110, 114 are shown as male contacts, it is understood, that some or all electrical contacts 106, 110, 114 may also be provided as female contacts.

The electrical connector 100 further comprises a light sensor 123 arranged in the contact space 103 (see Figure 2). The light sensor 123 senses light 124 emitted in a respective contact housing of at least one of the electrical contacts 106, 110, 114 that comprise an opening 121 in radial direction. Such light 124 is usually only created by an electric arc, since no other light source is present inside of the hollow contact housings 107, 111, 115.

It is understood, that the exemplary arrangement of electrical connector 100 with three electrical contacts 106, 110, 114 is just exemplarily chosen. In other embodiments, any number of electrical contacts is possible. Further, a combination of high-power contacts for power transmission and data contacts is also possible, wherein only the high-power contacts may be monitored in such an embodiment, for the occurrence of an electric arc.

The electrical connector 100 may especially be a connector for coupling electrical vehicles to charging stations. Exemplary connectors include, but are not limited to, J1772 connectors, Mennekes connectors, GB/T connectors, CCS1 connectors, CHAdeMO connectors, CCS2 connectors, and vendor-specific connectors.

Figure 2 shows a sectional view of the electrical connector 100 cut by a plane that lies in the vertical axis and the longitudinal axis. Therefore, electrical contact 114 is not visible, and electrical contact 106 is cut in half.

In the sectional view, it can be seen that the light sensor 123 is provided on the wall that closes the contact space 103 on the back end. Both, the electrical contact 106 and the electrical connector 110 extend from this wall. It is understood, that the light sensor 123 may alternatively be provided on any position in the contact space 103.

The electrical contact 106 and the electrical connector 110 both comprise an opening 121, 122 in radial direction that is positioned near the wall on the back end of the contact space 103, like the light sensor 123. It is understood, that the openings 121, 122 may both be positioned anywhere on the length of the electrical contacts 106, 110. The openings 121, 122 will in any case be provided such, that the light travelling through these openings 121, 122 may reach light sensor 123. Although not visible in the sectional view, electrical contact 114 may be provided analogously to electrical contacts 106, 110 with a respective opening.

If an electric arc is generated in one of the electrical contacts 106, 110, 114, the light 124 generated by the electric arc may travel to the light sensor 123 and the light sensor 123 may output a respective signal.

It is understood, that in other embodiments, more than one light sensor 123 may be provided at different positions in the contact space 103. In addition, or as alternative, trenches may be provided in the back wall of the contact space, it is understood, that such trenches may be covered with reflective coating. As alternative, or in addition, the contact space may be deeper than the counterpart of the electrical connector 100, therefore leaving free space for the light to travel between the back wall and the material of the counterpart.

Further, although not shown, in other embodiments, a coupling detector may be provided in the electrical connector 100, that detects if the opening on the front side is covered by a counterpart to the electrical connector 100, which allows no or only little external light to enter the contact space 103. In such a situation, any light in the contact space 103 may be assumed to be generated by an electric arc.

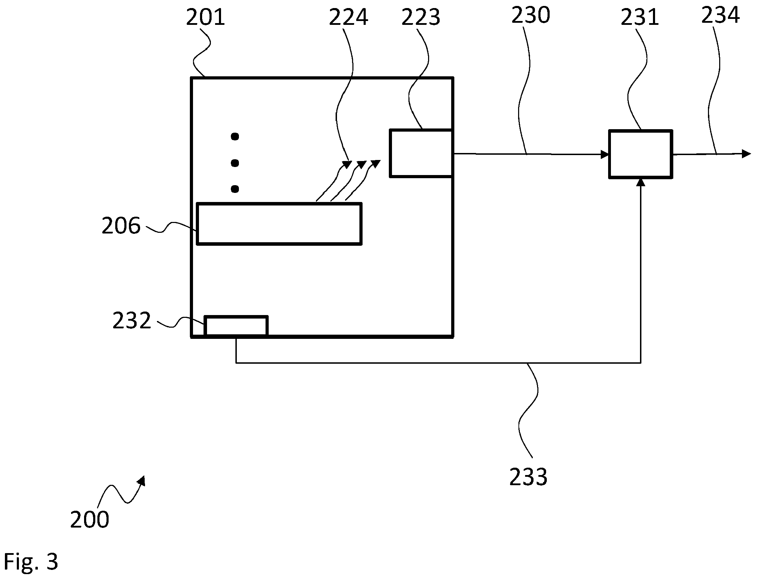

Figure 3 shows a block diagram of an electrical connector 200. The electrical connector 200 comprises an outer enclosure 201. In the outer enclosure 201 a schematically shown electrical contact 206 is shown. More electrical contacts are hinted at by thee dots. In addition, in the outer enclosure 201 a light sensor 223 is provided. The light sensor 223 is coupled to an evaluation processor 231 and provides a detection signal 230 to the evaluation processor 231.

Further, the electrical connector 200 comprises a coupling detector 232. The coupling detector 232 may be e.g., a magnetic sensor i.e., a hall type sensor, or a switch that is actuated when the electrical connector 200 is coupled to a counterpart. The coupling detector 232 provides the evaluation processor 231 with a coupling signal 233 when the electrical connector 200 is coupled to a counterpart and the front-side opening is covered by the counterpart.

The evaluation processor 231 evaluates the detection signal 230 and provides an arc alarm signal 234 in case that the detection signal 230 is indicative of an electric arc in any one of the electrical contacts 206. The evaluation processor 231 may for example determine that the detection signal 230 is indicative of an electric arc if the detection signal 230 indicates a light intensity above a predetermined intensity threshold. Such a predetermined threshold may be a fixed threshold. As alternative, the evaluation processor 231 may calculate the predetermined threshold as an average of the light intensity indicated by the detection signal 230 over a predetermined period of time plus a predetermined threshold value.

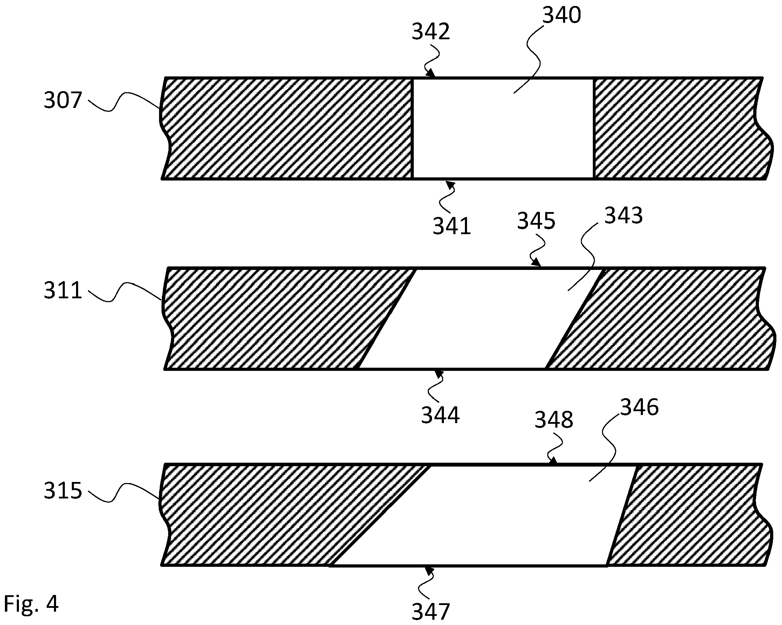

Figure 4 shows sectional views of three possible hollow contact housings 307, 311, 315. Each one of the possible hollow contact housings 307, 311, 315 comprises an opening and a light guiding element 340, 343, 356 arranged in the respective opening.

The light guiding element 340 in the sectional view has a rectangular shape. This means that the light acceptance region 341 on the bottom of the light guiding element 340 has the same size and is vertically positioned under the light emitting region 342.

In contrast, with the light guiding element 343, the light acceptance region 344 on the bottom of the light guiding element 343 has the same size but is horizontally displaced under the light emitting region 345. Therefore, the light generated by an electrical arc may be accepted at another position horizontally, then the position from which it is emitted.

Finally, with the light guiding element 346, the light acceptance region 347 on the bottom of the light guiding element 346 has another size than and is horizontally displaced under the light emitting region 348. Therefore, the light generated by an electrical arc may be accepted at another position and may be collected from a larger surface than the surface of the light emitting region 348.

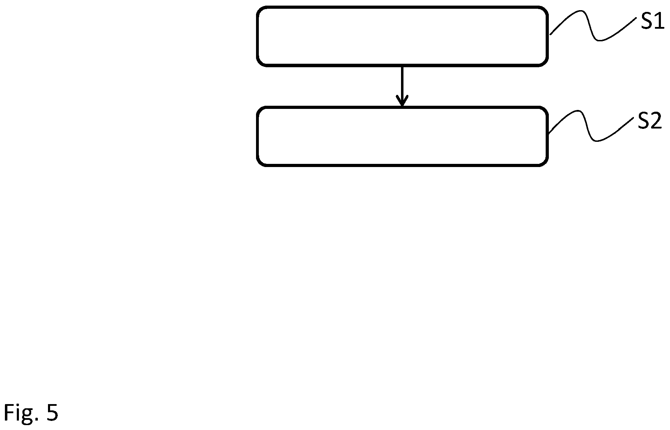

For sake of clarity in the following description of the method-based Fig. 5 the reference signs used above in the description of apparatus-based Figs. 1 - 4 will be maintained.

Figure 5 shows a flow diagram of a method for detecting an electric arc in an electrical connector 100, 200 as described above. Such an electrical connector 100, 200 comprises an outer enclosure 101, 201 that surrounds a contact space 103 and comprises an opening on a front side 105 of the electrical connector 100, 200 in longitudinal direction 102 of the contact space 103. The electrical connector 100, 200 further comprises a number of electrical contacts 106, 110, 114, 206 arranged in the contact space 103, wherein the electrical contacts 106, 110, 114, 206 each comprise a hollow contact housing 107, 111, 115 with an opening on the first side and an electrical contact element 109, 113, 117 arranged in the hollow contact housing 107, 111, 115, and wherein at least one of the hollow contact housings comprises an opening 121, 122 in radial direction

The method comprises sensing S1 light 124, 224 emitted in the respective contact housing of at least one of the electrical contacts 106, 110, 114, 206 that comprise an opening 121, 122 in radial direction, and outputting S2 a detection signal 230 based on the sensed light 124, 224.

The method may in addition comprise evaluating the detection signal 230 and providing an arc alarm signal 234 in case that the detection signal 230 is indicative of an electric arc. Further, the method may comprise detecting when the electrical connector 100, 200 is coupled to a counterpart and when the opening in the front side 105 of the hollow contact housing 107, 111, 115 is covered by the counterpart. Evaluating may then be performed only if it is detected that the electrical connector 100, 200 is coupled to a counterpart.

In addition, evaluating may comprise determining that the detection signal 230 is indicative of an electric arc if the detection signal 230 indicates a light intensity above a predetermined intensity threshold. Such predetermined threshold may be a fixed threshold. As alternative, the predetermined threshold may be calculated as an average of the light intensity indicated by the detection signal 230 over a predetermined period of time, e.g. over 1 second, 2, second, 3 seconds, 4 seconds, or 5 seconds, plus a predetermined threshold value.

In order to improve the measurement of the light emitted by an electric arc, the light 124, 224 emitted in a hollow contact housing 107, 111, 115 may be guided by a light guiding element 340, 343, 346 arranged in the opening 121, 122 of the respective hollow contact housing 107, 111, 115. The light guiding element 340, 343, 346 to this end comprises a light acceptance region 341, 344, 347 oriented to the inside of the hollow contact housing 107, 111, 115 and a light emitting region 342, 345, 348 oriented to the outside of the hollow contact housing 107, 111, 115.

It is understood, that the light acceptance region 341, 344, 347 may be displaced along a longitudinal axis of the hollow contact housing 107, 111, 115 with respect to the light emitting region 342, 345, 348. In addition, or as alternative, the light acceptance region 341, 344, 347 may be larger at least in the longitudinal axis of the hollow contact housing 107, 111, 115 than to the light emitting region 342, 345, 348.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS:

- 100, 200: electrical connector
- 101, 201: outer enclosure
- 102: longitudinal direction
- 103: contact space

- 105: front side
- 106, 110, 114, 206: electrical contact
- 107, 111, 115, 307, 311, 315: hollow contact housing
- 108, 112, 116: insertion opening
- 109, 113, 117: electrical contact element
- 120: cable
- 121, 122: opening
- 123, 223: light sensor
- 124,224: light

- 230: detection signal
- 231: evaluation processor
- 232: coupling detector
- 233: coupling signal
- 234: arc alarm signal

- 340, 343, 346: light guiding element
- 341, 344, 347: light acceptance region
- 342, 345, 348: light emitting region

- S1, S2: method steps

## Claims

1. Electrical connector (100, 200) comprising:
an outer enclosure (101, 201) that surrounds a contact space (103) and comprises an opening on a front side (105) of the electrical connector (100, 200) in longitudinal direction (102) of the contact space (103);
a number of electrical contacts (106, 110, 114, 206) arranged in the contact space (103), wherein the electrical contacts (106, 110, 114, 206) each comprise a hollow contact housing (107, 111, 115) with an insertion opening (108, 112, 116) on the first side and an electrical contact element (109, 113, 117) arranged in the hollow contact housing (107, 111, 115), and wherein at least one of the hollow contact housings (107, 111, 115) comprises an opening (121, 122) in radial direction; and
a light sensor (123, 223) arranged in the contact space (103) and configured to sense light (124, 224) emitted in a respective contact housing of at least one of the electrical contacts (106, 110, 114, 206) that comprise an opening (121, 122) in radial direction.

2. Electrical connector (100, 200) according to the preceding claim, comprising an evaluation processor (231) coupled to the light sensor (123, 223) and configured to evaluate a detection signal (230) provided by the light sensor (123, 223) and to provide an arc alarm signal (234) in case that the detection signal (230) is indicative of an electric arc.

3. Electrical connector (100, 200) according to the preceding claim, wherein the evaluation processor (231) is configured to determine that the detection signal (230) is indicative of an electric arc if the detection signal (230) indicates a light intensity above a predetermined intensity threshold.

4. Electrical connector (100, 200) according to the preceding claim, wherein the predetermined threshold is a fixed threshold; or
wherein the evaluation processor (231) is configured to calculate the predetermined threshold as an average of the light intensity indicated by the detection signal (230) over a predetermined period of time plus a predetermined threshold value.

5. Electrical connector (100, 200) according to any one of the preceding claims, comprising a light guiding element (340, 343, 346) for each one of the hollow contact housings (107, 111, 115), wherein each one of the light guiding elements (340, 343, 346) is arranged in the opening (121, 122) of the respective hollow contact housing (107, 111, 115), and comprises a light acceptance region (341, 344, 347) oriented to the inside of the hollow contact housing (107, 111, 115) and a light emitting region (342, 345, 348) oriented to the outside of the hollow contact housing (107, 111, 115).

6. Electrical connector (100, 200) according to the preceding claim, wherein the light acceptance region (341, 344, 347) is displaced along a longitudinal axis of the hollow contact housing (107, 111, 115) with respect to the light emitting region (342, 345, 348); and/or
wherein the light acceptance region (341, 344, 347) is larger in the longitudinal axis of the hollow contact housing (107, 111, 115) than the light emitting region (342, 345, 348).

7. Electrical connector (100, 200) according to any one of the preceding claims 2 to 6, comprising a coupling detector (232) coupled to the evaluation processor (231) and configured to detect when the electrical connector (100, 200) is coupled to a counterpart and when the opening in the front side (105) of the hollow contact housing 1(07, 111, 115) is covered by the counterpart, wherein the evaluation processor (231) is configured to evaluate the detection signal (230) only if the coupling detector (232) detects that the opening in the front side (105) is covered.

8. Method for detecting an electric arc in an electrical connector (100, 200) with an outer enclosure (101, 201) that surrounds a contact space (103) and comprises an opening on a front side (105) of the electrical connector (100, 200) in longitudinal direction (102) of the contact space (103), the electrical connector (100, 200) further comprising a number of electrical contacts (106, 110, 114, 206) arranged in the contact space (103), wherein the electrical contacts (106, 110, 114, 206) each comprise a hollow contact housing (107, 111, 115) with an opening on the first side and an electrical contact element (109, 113, 117) arranged in the hollow contact housing (107, 111, 115), and wherein at least one of the hollow contact housings (107, 111, 115) comprises an opening (121, 122) in radial direction, the method comprising:
sensing (S1) light (124, 224) emitted in the respective contact housing of at least one of the electrical contacts (106, 110, 114, 206) that comprise an opening (121, 122) in radial direction; and
outputting (S2) a detection signal (230) based on the sensed light (124, 224).

9. Method according to the preceding claim, comprising evaluating the detection signal (230) and providing an arc alarm signal (234) in case that the detection signal (230) is indicative of an electric arc.

10. Method according to the preceding claim, wherein evaluating comprises determining that the detection signal (230) is indicative of an electric arc if the detection signal (230) indicates a light intensity above a predetermined intensity threshold.

11. Method according to the preceding claim, wherein the predetermined threshold is a fixed threshold; or
wherein the predetermined threshold is calculated as an average of the light intensity indicated by the detection signal (230) over a predetermined period of time plus a predetermined threshold value.

12. Method according to any one of the preceding method-based claims, wherein the light (124, 224) emitted in a hollow contact housing (107, 111, 115) is guided by a light guiding element (340, 343, 346) arranged in the opening (121, 122) of the respective hollow contact housing (107, 111, 115), wherein the light guiding element (340, 343, 346) comprises a light acceptance region (341, 344, 347) oriented to the inside of the hollow contact housing (107, 111, 115) and a light emitting region (342, 345, 348) oriented to the outside of the hollow contact housing (107, 111, 115).

13. Method according to the preceding claim, wherein the light acceptance region (341, 344, 347) is displaced along a longitudinal axis of the hollow contact housing (107, 111, 115) with respect to the light emitting region (342, 345, 348); and/or
wherein the light acceptance region (341, 344, 347) is larger in the longitudinal axis of the hollow contact housing (107, 111, 115) than the light emitting region (342, 345, 348).

14. Method according to any one of the preceding method-based claims, comprising detecting when the electrical connector (100, 200) is coupled to a counterpart and when the opening in the front side (105) of the hollow contact housing (107, 111, 115) is covered by the counterpart, wherein evaluating is performed only if it is detected that the electrical connector (100, 200) is coupled to a counterpart.
